# EUROPÄISCHE PATENTSCHRIFT

(11) **EP 1 083 098 B1**
(45) Veröffentlichungstag und Bekanntmachung des Hinweises auf die Patenterteilung: **08.12.2004**
(21) Anmeldenummer: 00100396.1
(22) Anmeldetag: 08.01.2000
(51) Int. Cl.: B60R 19/26, B60R 19/34, B60R 19/36

(54) **Aufpralldämpfer für Kraftfahrzeuge**
Impact absorber for vehicle
Amortisseur de choc pour véhicule

(30) Priorität: 09.09.1999 DE 19943207
(43) Veröffentlichungstag der Anmeldung: 14.03.2001
(73) Patentinhaber: BENTELER AG, D-33104 Paderborn (DE)
(72) Erfinder: Kröning, Achim, Dr.Dipl.-Ing., 33102 Paderborn (DE); Leontaris, Georgios, Dr. Dipl.-Ing., 33106 Paderborn-Wewer (DE)
(74) Vertreter: Ksoll, Peter, Dr.-Ing.

(56) Entgegenhaltungen:
- EP-A- 0 816 179
- DE-A- 19 715 308
- DE-A- 19 829 566
- DE-C- 19 709 171
- PATENT ABSTRACTS OF JAPAN vol. 011, no. 025 (M-556), 23. Januar 1987 (1987-01-23) -& JP 61 196847 A (MITSUBISHI MOTORS CORP), 1. September 1986 (1986-09-01)

## Beschreibung

Die Erfindung betrifft einen Aufpralldämpfer für Kraftfahrzeuge der als Sicherungsglied zwischen einem Stoßfänger und dem Rahmen des Kraftfahrzeugs angeordnet ist und bei Kollision des Kraftfahrzeuges mit einem Hindernis Energie durch Verformung aufnimmt.

Durch die gattungsgemässe DE 298 08 143 U1 zählt ein Aufpralldämpfer für Kraftfahrzeuge zum Stand der Technik, der als Sicherungsglied zwischen einem Stoßfänger und dem Rahmen des Kraftfahrzeugs angeordnet ist und ein in einem Außenrohr gelagertes stranggepresstes Innenprofil aufweist. Außenrohr und Innenprofil verformen sich bei einem Aufprall und nehmen so die zugeführte Stoßenergie auf. Durch die in einem Längenabschnitt fachwerkartigen Verstrebungen ist dieser Aufpralldämpfer relativ starr. Ferner ist die Halterung zur Befestigung des Stoßfängers lediglich auf einen bestimmten Stoßfängertyp abgestimmt.

Primäres Ziel ist es, durch Stoßfänger und Aufpralldämpfer die Insassen eines Fahrzeuges zu schützen und Beschädigungen des Rahmens zu verhindern, um aufwendige Reparaturn am Fahrzeug zu vermeiden. Hierbei kommt es wesentlich darauf an, bei bestehenden Mindestanforderungen an das Energieabsorptionsvermögen einen Aufpralldämpfer möglichst leicht und fertigungstechnisch günstig zu gestalten.

Durch Leichtbauweise ist eine Reduzierung des Kraftstoffverbrauchs und der einhergehenden Schadstoffemissionen möglich. Gleichzeitig müssen Aufpralldämpfer in sicherheitstechnischer Hinsicht eine ausreichende Festigkeit aufweisen, um eine geforderte Knicksteifigkeit in Längsrichtung zu gewährleisten. Der Gewichtsreduktion sind somit Grenzen gesetzt, in denen sich Material- und Konstruktionsparameter bewegen.

Der Erfindung liegt ausgehend vom Stand der Technik die Aufgabe zugrunde, einen Aufpralldämpfer hinsichtlich seines Energieabsorptionsvermögens und gewichtsmäßig zu verbessern und montagetechnisch weiterzuentwickeln.

Diese Aufgabe wird erfindungsgemäß durch die Merkmale des Patentanspruchs 1 gelöst, wobei ein Innenprofil mehrere untereinander verbundene Hohlkörper umfasst und der stoßfängerseitige Hohlkörper von einem mit dem Stoßfänger verbundenen Kopplungsglied durchsetzt ist.

Die Hohlkörper des Innenprofils besitzen quer zur Längserstreckung des Außenrohrs verlaufende Längsachsen und sind durch entsprechenden Zuschnitt auf die konstrukttiven Vorgaben wie z.B. den Innendurchmesser des Außenrohrs rationell und kostengünstig abstimmbar. Wesentlich für die konstruktive Auslegung eines Aufpralldämpfers ist auch eine ausreichende Knicksteifigkeit. Diese kann bei der erfindungsgemäßen Lösung dadurch realisiert werden, dass sich das Innenprofil formschlüssig im Außenrohr abstützt. Hierdurch wird ein vorteilhaftes Zusammenwirken dieser Komponenten erzielt.

Vorzugsweise besitzen die Hohlkörper große Hohlräume, wodurch der Aufpralldämpfer einen entsprechend langen Deformationsweg aufweist und entsprechend viel Aufprallenergie in Verformungsenergie umgewandelt werden kann. Durch große Hohlräume ist eine besonders weiche Verformung des Aufpralldämpfers möglich. Hierdurch wird ein vorteilhafter Schutz schon bei einer Kollision mit niedriger Geschwindigkeit erzielt.

Die Hohlkörper sind untereinander verbunden, wobei ein oder mehrere Stege zwischen benachbarten Hohlkörpern angeordnet sein können. Technisch besonders günstig ist ein Steg, der in der Mittellängsebene des Innenprofils angeordnet ist, in welcher auch die Längsachsen der Hohlkörper verlaufen. Durch die gegenseitige Verbindung der Hohlkörper des Innenprofils ist ein fester Verbund geschaffen, der im funktionellen Zusammenspiel mit dem Außenrohr in der Lage ist, hohe Querkräfte am Aufpralldämpfer aufzunehmen. Fertigungstechnisch günstig lässt sich das Innenprofil durch Ablängung eines stranggepressten Ausgangsprofils herstellen.

Der Aufpralldämpfer ist über ein den stoßfängerseitigen Hohlkörper durchsetzendes Kopplungsglied mit dem Stoßfänger verbunden. Durch dieses Merkmal ist eine besonders einfache Anbindung an den Stoßfänger möglich. Indem das Kopplungsglied außerdem einen Hohlkörper des Innenprofils durchsetzt, ist dieser automatisch im Außenrohr lageorientiert. Zusätzliche Befestigungselemente zur Fixierung des Innenprofils sind nicht erforderlich. Das Kopplungsglied kann zumindest abschnittsweise so bemessen sein, dass es einen Hohlkörper formschlüssig durchsetzt, wodurch eingeleitete Stoßkräfte optimal auf das Innenprofil übertragbar sind.

Als Außenrohre im Sinne der Erfindung sind langgestreckte Hohlprofile zu verstehen, die einen Hohlraum zur Aufnahme eines Energie absorbierenden Innenprofils aufweisen. Als Außenrohre eignen sich daher auch in Pressschalenbauweise gefertigte Profile.

Das Kopplungsglied kann zur Lagefixierung des Innenprofils auch das Außenprofil durchsetzen. Hierzu besitzt das Außenrohr an den Querschnitt des Kopplungsglieds angepasste Durchbrüche, wodurch angreifende Kräfte vorteilhaft vom Kopplungsglied direkt auf das Außenrohr übertragbar sind. Das Außenrohr besitzt bevorzugt einen rechteckigen Querschnitt.

Nach den Merkmalen des Anspruchs 2 ist der Stoßfänger durch wenigstens einen Schraubbolzen, der sich in Längsrichtung des Kopplungsglieds erstreckt, mit dem Aufpralldämpfer verbunden. Jeweils ein Schraubbolzen kann stirnseitig in die Enden des Kopplungsglieds eingeschraubt werden. Es ist aber auch denkbar, dann ein längerer Schraubbolzen das gesamte Kopplungsglied durchsetzt. Im Kopplungsglied sind dann entsprechende Durchgangsbohrungen angeordnet.

Grundsätzlich sind der stoßfängerseitige Hohlkörper und das Kopplungsglied fest miteinander verbunden. Alternativ ist nach Anspruch 3 vorgesehen, dass der stoßfängerseitige Hohlkörper und das Kopplungsglied relativ zueinander verlagerbar angeordnet sind. Hierdurch ist es möglich, den erfindungsgemäßen Aufpralldämpfer fertigungstechnisch auf die verschiedensten Einbausituationen abzustimmen.

Ein besonders hohes Energieabsorptionsvermögen besitzen Hohlkörper mit einem runden, ovalen oder mehreckigen Querschnitt, wobei runde Hohlkörper als besonders zweckmäßig erachtet werden (Anspruch 4). Insbesondere wenn das Kopplungsglied im stoßfängerseitigen Hohlkörper relativ verlagerbar angeordnet sein soll, bietet sich ein runder Querschnitt sowohl des Hohlkörpers als auch des Kopplungsglieds an.

Die Längsachsen der Hohlkörper und damit auch die Längsachse des den stoßfängerseitigen Hohlkörper durchsetzenden Kopplungsglieds verlaufen quer zur Längserstreckung des Aufpralldämpfers. Im Rahmen der Ausführungsform des Anspruchs 5 verlaufen diese Längsachsen vertikal. Grundsätzlich ist aber auch jede weitere Orientierung der Längsachsen der Hohlkörper denkbar.

Zur Anbindung des Aufpralldämpfers an dem Rahmen des Kraftfahrzeugs ist das Außenrohr mit einem Flansch verbunden, der an dem Rahmen festlegbar ist (Anspruch 6). Der Flansch kann sowohl stoffschlüssig, z.B. durch Schweißen, mit dem Außenrohr verbunden sein als auch durch eine kraftschlüssige Lösung, wie z.B. durch Schrauben. Auch eine formschlüssige Lösung, wie z.B. das Durchsetzfügen, ist zur Verbindung des Außenrohrs mit dem Flansch denkbar. Damit ein Aufpralldämpfer nach einer Kollision leicht ausgetauscht werden kann, ist der Flansch vorzugsweise durch Verschrauben am Rahmen befestigt.

In vorteilhafter Ausgestaltung kann das Innenprofil eine den Flansch kontaktierende Stützplatte besitzen (Anspruch 7). Die Stützplatte hat die Funktion, die am Innenprofil vom Stoßfänger her angreifenden Kräfte möglichst gleichmäßig aufzunehmen und an den als Widerlager fungierenden Flansch weiterzuleiten.

Eine weitere Verbesserung des Deformationsverhaltens und Energieabsorptionsvermögens gewährleisten die Merkmale des Anspruchs 8. Danach ist wenigstens teilweise eine visko-elastische Füllung zwischen dem Außenrohr und dem Innenprofil und/oder im Innenprofil vorgesehen. Besonders effektiv ist hierbei eine Füllung der Hohlkörper des Innenprofils. Als visko-elastische Füllungen eignen sich insbesondere Kunststoffe sowie Kunststoffschäume.

Nach Anspruch 9 besteht das Innenprofil und/oder das Außenrohr aus einer Leichtmetalllegierung, vorzugsweise einer Aluminiumlegierung, wie AlMgSi. Unabhängig hiervon sind eine Vielzahl weiterer Materialkombinationen denkbar, um das Verformungsverhalten des erfindungsgemäßen Aufpralldämpfers linear, progressiv oder degressiv zu gespalten. Es ist im Rahmen der Erfindung auch denkbar, Innenrohre und Außenprofile aus Kunststoffen herzustellen, die ein ausreichendes Energieabsorptionsvermögen besitzen. Auch eine Hybridanordnung, bei der mehrere unterschiedliche Materialien verwendet werden ist denkbar, wie z.B. eine Kombination aus Kunststoff- und Metallbauteilen.

Weitere Parameter zur Optimierung des Verformungsverhaltens sind variierende Wanddicken des Außenrohrs, wobei die Wände des Außenrohrs auch Öffnungen aufweisen können. Günstig lassen sich auch die Wanddicken der Hohlkörper des Innenprofils variieren, um eine optimale Energieabsorption des erfindungsgemäßen Aufpralldämpfers zu erzielen.

Die Erfindung ist nachfolgend anhand eines in den Zeichnungen dargestellten Ausführungsbeispiels näher beschrieben. Es zeigen:
- Figur 1: in perspektivischer Darstellung und teilweise im Schnitt einen mit einem Stoßfänger verbundenen erfindungsgemäßen Aufpralldämpfer und
- Figur 2: eine perspektivische Darstellung eines stranggepressten Innenprofils mit einem Kopplungsglied.

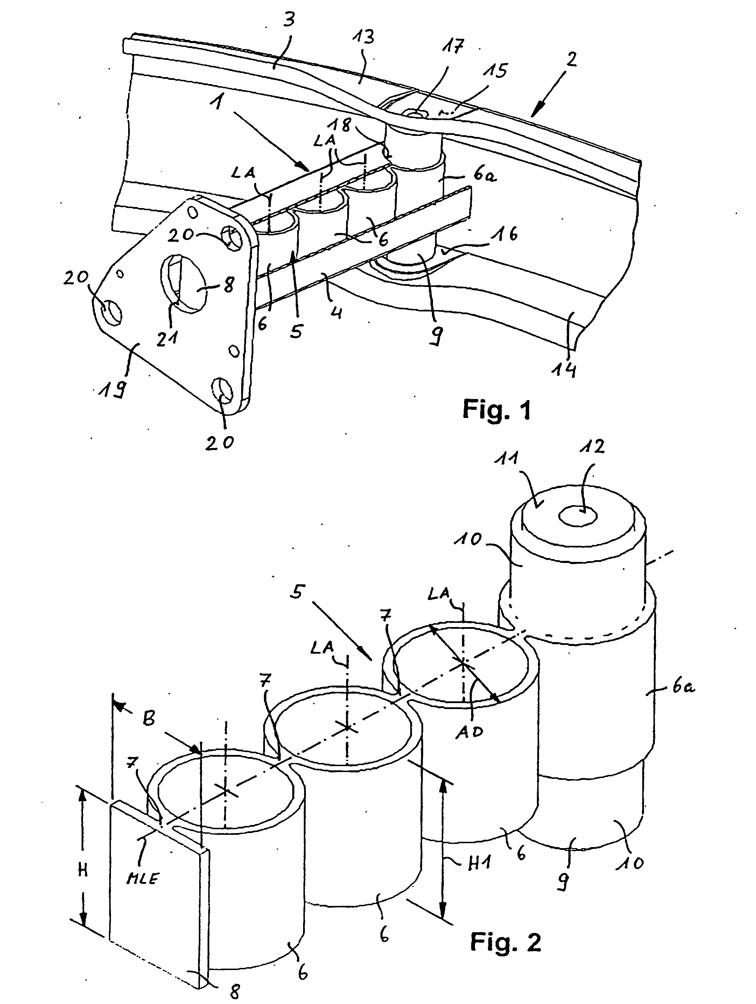

Mit 1 ist in Figur 1 ein Aufpralldämpfer für Kraftfahrzeuge bezeichnet, der als Sicherungsglied zwischen einem Stoßfänger 2 und einem nicht näher dargestellten Rahmen eines Kraftfahrzeugs dient. Der Stoßfänger 2 ist ein quer an Front oder Heck eines Kraftfahrzeugs angebrachtes Bauteil, welches sich aus einer Kunststoffschale und einem Stoßfängerquerträger 3 als Stützkonstruktion zusammensetzt. Im dargestellten Ausführungsbeispiel ist zur Vereinfachung lediglich ein Längenabschnitt eines Stoßfängerquerträgers 3 dargestellt, der mit dem Aufpralldämpfer 1 gekoppelt ist.

Der Aufpralldämpfer 1 umfasst ein rechteckig konfiguriertes Außenrohr 4, in welchem ein stranggepresstes Innenprofil 5 gelagert ist. Das Innenprofil 5 besteht aus einer Aneinanderreihung mehrerer untereinander verbundener zylindrischer Hohlkörper 6.

Die Hohlkörper 6 besitzen vertikal verlaufende parallele Längsachsen LA, die damit quer zur Längsrichtung des Außenrohrs 4 stehen. Die Hohlkörper 6 sind über Stege 7 miteinander verbunden, die in der Mittellängsebene des Innenprofils 5 verlaufen (Figur 2).

Figur 2 zeigt ferner, dass das Innenprofil 5 auf seinem dem Stoßfänger 2 abgewandten Ende eine rechteckige Stützplatte 8 besitzt, die ebenfalls über einen Steg 7 mit dem angrenzenden Hohlkörper 6 verbunden ist. Die Breite B der Stützplatte entspricht dem Außendurchmesser AD der Hohlkörper 6 und seine Höhe H der Höhe H1 der Hohlkörper 6.

Der stoßfängerseitige Hohlkörper 6a ist von einem Kopplungsglied 9 formschlüssig durchsetzt. Das Kopplungsglied 9 ragt mit seinen Enden 10 beidseitig aus dem Hohlkörper 6a und ist in seinen Stirnseiten 11 mit jeweils einer zentralen Gewindebohrung 12 versehen.

Figur 1 zeigt, wie das Kopplungsglied 9 zwischen einen oberen und einen unteren Schenkel 13, 14 des im Querschnitt hutförmigen Stoßfängerquerträgers 3 greift und an zueinander parallelen Anlageflächen 15, 16 mit dem Stoßfängerträger 3 gekoppelt ist. Jeweils ein Schraubbolzen 17 durchsetzt die Anlagefläche 15 bzw. 16 und greift in die Gewindebohrung 12 im Kopplungsglied 9 ein.

Das Kopplungsglied 9 durchsetzt in der Einbauposition sowohl das Innenprofil 5 als auch korrespondierende Durchbrüche 18 im Außenrohr 4. Hierdurch ist das Innenprofil 5 im Außenrohr 4 lagefixiert.

Der Aufpralldämpfer 1 besitzt an seinem dem Stoßfänger 2 abgewandten Ende einen Flansch 19, der mit dem Außenrohr 4 verbunden ist. Der Flansch 19 liegt in der gleichen Ebene wie die Stützplatte 8 des Innenprofils 5, die den Flansch 19 flächig kontaktiert. Der Flansch 19 ist zur schraubtechnischen Festlegung am Rahmen des Kraftfahrzeugs mit mehreren Bohrungen 20 ausgestaltet, die in den Ecken des im wesentlichen trapezförmigen Flansches 19 plaziert sind. Weiterhin besitzt der Flansch in seinem mittleren Bereich eine Öffnung 21.

Während das Innenprofil 5 sowie das Außenrohr 4 relativ geringe Wandstärken aufweisen, ist die Flanschplatte 19 dicker gestaltet. Die Wandstärken des Innenprofils 5 sowie des Außenrohrs 4 sind in diesem Ausführungsbeispiel konstant.

Das Kopplungsglied 9 kann zur Gewichtsersparnis als Hohlkörper gestaltet sein.

### Bezugszeichenaufstellung:

- 1 -: Aufpralldämpfer
- 2 -: Stoßfänger
- 3 -: Stoßfängerträger von 2
- 4 -: Außenrohr
- 5 -: Innenprofil
- 6 -: Hohlkörper
6a - Hohlkörper
- 7 -: Steg
- 8 -: Stützplatte
- 9 -: Kopplungsglied
- 10 -: Ende von 9
- 11 -: Stirnseite von 9
- 12 -: Gewindebohrung
- 13 -: Schenkel von 3
- 14 -: Schenkel von 3
- 15 -: Anlagefläche von 13
- 16 -: Anlagefläche von 14
- 17 -: Schraubbolzen
- 18 -: Durchbruch
- 19 -: Flansch
- 20 -: Bohrung
- 21 -: Öffnung

- AD -: Außendurchmesser von 6
- B -: Breite von 8
- H -: Höhe von 8
- H1 -: Höhe von 6
- LA -: Längsachse von 6
- MLE -: Mittellängsebene von 5

## Patentansprüche

1. Aufpralldämpfer für Kraftfahrzeuge als Sicherungsglied zwischen einem Stoßfänger (2) und dem Rahmen des Kraftfahrzeugs mit einem in einem Außenrohr (4) gelagerten Innenprofil (5), das mehrere untereinander verbundene Hohlkörper (6, 6a) mit quer zum Außenrohr (4) verlaufenden Längsachsen (LA) umfasst, **dadurch gekennzeichnet, dass** der stoßfängerseitige Hohlkörper (6a) von einem mit dem Stoßfänger (2) verbundenen Kopplungsglied (9) durchsetzt ist.

2. Aufpralldämpfer nach Anspruch 1, **dadurch gekennzeichnet, dass** der Stoßfänger (2) durch wenigstens einen Schraubbolzen (17) in der Längserstreckung des Kopplungsglieds (9) mit diesem verbunden ist.

3. Aufpralldämpfer nach Anspruch 1 oder 2, **dadurch gekennzeichnet, dass** der stoßfängerseitige Hohlkörper (6a) und das Kopplungsglied (9) zueinander relativ verlagerbar angeordnet sind.

4. Aufpralldämpfer nach einem der Ansprüche 1 bis 3, **dadurch gekennzeichnet, dass** die Hohlkörper (6, 6a) einen runden, ovalen oder mehreckigen Querschnitt besitzen.

5. Aufpralldämpfer nach einem der Ansprüche 1 bis 4, **dadurch gekennzeichnet, dass** die Längsachsen (LA) der Hohlkörper (6, 6a) vertikal verlaufen.

6. Aufpralldämpfer nach einem der Ansprüche 1 bis 5, **dadurch gekennzeichnet, dass** das Außenrohr (4) mit einem am Rahmen des Kraftfahrzeugs festlegbaren Flansch (19) verbunden ist.

7. Aufpralldämpfer nach Anspruch 6, **dadurch gekennzeichnet, dass** das Innenprofil (5) eine den Flansch (19) kontaktierende Stützplatte (8) besitzt.

8. Aufpralldämpfer nach einem der Ansprüche 1 bis 7, **dadurch gekennzeichnet, dass** wenigstens teilweise eine visko-elastische Füllung zwischen dem Außenrohr (4) und dem Innenprofil (5) und/oder im Innenprofil (5) vorgesehen ist.

9. Aufpralldämpfer nach einem der Ansprüche 1 bis 8, **dadurch gekennzeichnet, dass** das Innenprofil (5) und/oder das Außenrohr (4) aus einer Leichtmetall-Legierung, vorzugsweise AlMgSi, besteht.

## Claims

1. An impact absorber for motor vehicles as a safety member between a bumper (2) and the frame of the motor vehicle with an inner profile (5) which is mounted in an outer tube (4) and which comprises a plurality of interconnected hollow members (6, 6a) with longitudinal axes (LA) extending transversely of the outer tube (4), **characterised in that** the hollow member (6a) adjacent the bumper is traversed by a coupling member (9) connected to the bumper (2).

2. An impact absorber according to claim 1, **characterised in that** the bumper (2) is connected to the coupling member (9) by at least one screw bolt (17) along the length of the coupling member (9).

3. An impact absorber according to claim 1 or 2, **characterised in that** the hollow member (6a) adjacent the bumper and the coupling member (9) are disposed so as to be displaceable relatively to one another.

4. An impact absorber according to any one of claims 1 to 3, **characterised in that** the hollow members (6, 6a) have a round, oval or polygonal cross-section.

5. An impact absorber according to any one of claims 1 to 4, **characterised in that** the longitudinal axes (LA) of the hollow members (6, 6a) extend vertically.

6. An impact absorber according to any one of claims 1 to 5, **characterised in that** the outer tube (4) is connected to a flange (19) fixable on the motor vehicle frame.

7. An impact absorber according to claim 6, **characterised in that** the inner profile (5) has a support plate (8) contacting the flange (19).

8. An impact absorber according to any one of claims 1 to 7, **characterised in that** a visco-elastic filling is provided at least partially between the outer tube (4) and the inner profile (5) and/or in the inner profile (5).

9. An impact absorber according to any one of claims 1 to 8, **characterised in that** the inner profile (5) and/or the outer tube (4) consist(s) of a light metal alloy, preferably AlMgSi.

## Revendications

1. Amortisseur de chocs pour véhicules automobiles en tant qu'élément de sécurité entre un pare-chocs (2) et le châssis du véhicule automobile avec un profil interne (5) logé dans un tube extérieur (4), qui comprend plusieurs corps creux (6,6a) reliés entre eux par des axes longitudinaux (LA) s'étendant transversalement par rapport au tube extérieur (4),
**caractérisé en ce que** le corps creux (6a) côté pare-chocs (6a) est traversé par un élément d'accouplement (9) raccordé au pare-chocs (2)

2. Amortisseur de chocs selon la revendication 1,
**caractérisé en ce que** le pare-chocs (2) est raccordé à celui-ci par au moins un boulon fileté (17) dans l'extension longitudinale de l'élément d'accouplement (9).

3. Amortisseur de chocs selon la revendication 1 ou 2,
**caractérisé en ce que** le corps creux (6a) côté pare-chocs et l'élément d'accouplement (9) sont déplaçables de façon relative l'un par rapport à l'autre.

4. Amortisseur de chocs selon l'une des revendications 1 à 3,
**caractérisé en ce que** les corps creux (6,6a) possèdent une section transversale ronde, ovale ou polygonale.

5. Amortisseur de chocs selon l'une des revendications 1 à 4,
**caractérisé en ce que** les axes longitudinaux (LA) des corps creux (6,6a) s'étendant verticalement.

6. Amortisseur de chocs selon l'une des revendications 1 à 5, **caractérisé en ce que** le tube extérieur (4) est raccordé à une bride (19) fixée sur le châssis du véhicule.

7. Amortisseur de chocs selon la revendication 6, **caractérisé en ce que** le profilé intérieur (5) possède une bride (19) en contact avec la plaque d'appui (8).

8. Amortisseur de chocs selon l'une des revendications 1 à 7,
**caractérisé en ce qu'**il est prévu au moins partiellement un remplissage visco-élastique entre un tube extérieur (4) et le profil intérieur (5) et/ou dans le profil intérieur (5).

9. Amortisseur de chocs selon l'une des revendications 1 à 8,
**caractérisé en ce que**,
le profil intérieur (5) et/ou le tube extérieur (4) consistent en un alliage léger, de préférence AlmgSi.
